# FASCICULE DE BREVET EUROPEEN

(11) **EP 4 188 684 B1**
(45) Date de publication et mention de la délivrance du brevet: **10.12.2025**
(21) Numéro de dépôt: 21758404.4
(22) Date de dépôt: 27.07.2021
(51) Int. Cl.: B29C 67/24, D04H 1/4209, D04H 1/4226

(54) **ETUVE MUNIE D'UN SYSTEME DE MESURE A L'INTERIEUR DU MATELAS FIBREUX**
OFEN MIT EINEM MESSSYSTEM INNERHALB DER FASERMATTE
OVEN PROVIDED WITH A MEASUREMENT SYSTEM INSIDE THE FIBROUS MAT

(30) Priorité: 29.07.2020 FR 2008019
(43) Date de publication de la demande: 07.06.2023
(73) Titulaire: SAINT-GOBAIN ISOVER, 92400 Courbevoie (FR)
(72) Inventeur: DUBAELE, Brice, 60130 Avrechy (FR); BAUCHARD, Jonathan, 60870 Villers-Saint-Paul (FR); METROPE, Christian, 60510 Lafraye (FR); GUYOT, Pierrick, 92120 Montrouge (FR)
(74) Mandataire: Saint-Gobain Recherche
(86) Numéro de dépôt international: PCT/FR2021/051399
(87) Numéro de publication internationale: WO 2022/023662

(56) Documents cités:
- WO-A1-2016/108006
- WO-A2-2006/017106

## Description

L'invention concerne le domaine des matelas fibreux, notamment les matelas comprenant des fibres minérales ou végétales liées par un liant. Ces matelas sont destinés à être découpés pour former ensuite par exemple des panneaux ou rouleaux d'isolation thermique et/ou acoustique.

La fabrication de tels matelas de fibres comprend primairement le fibrage et le dépôt de fibres sur un convoyeur ou transporteur mobile perforé. Les fibres sont plaquées sur le convoyeur à l'aide de caissons d'aspiration agencés sous le transporteur sur lequel elles sont déposées. Lors du fibrage, un liant est pulvérisé sur les fibres, ce liant ayant des propriétés d'adhésivité et comprenant d'habitude une matière durcissable à chaud, comme une résine thermodurcissable.

La couche primaire de fibres relativement lâches sur le convoyeur collecteur est ensuite transférée à un dispositif de chauffage appelé communément dans le domaine en cause étuve de réticulation. Le matelas de fibre traverse l'étuve sur toute sa longueur, grâce à des convoyeurs supplémentaires. Ce sont fréquemment deux bandes sans fin en regard l'une de l'autre et espacées d'une distance ajustée pour déterminer l'épaisseur du matelas qui se forme. Chaque bande des convoyeurs est par ailleurs constituée de palettes formant des grilles articulées entre elles et perforées pour être perméables à l'air et aux autres gaz issus du chauffage du matelas. Un tel matelas présente ainsi une densité plus ou moins importante en fonction du degré de la compression exercée par les deux convoyeurs dans l'étuve.

Pendant son passage dans l'étuve, le matelas est simultanément asséché et soumis à un traitement thermique spécifique qui provoque la polymérisation (ou « durcissement ») de la résine thermodurcissable du liant présent à la surface des fibres.

Le mode opératoire utilisé pour provoquer le durcissement du liant consiste à faire passer de l'air chauffé dans le matelas, de telle façon que le liant présent dans toute l'épaisseur du matelas soit porté progressivement à une température supérieure à sa température de durcissement. A cette fin, l'étuve de réticulation est composée d'une enceinte constituant une chambre fermée autour du matelas, dans laquelle sont disposés une série de caissons alimentés en air chaud issu de brûleurs et mis en circulation par des ventilateurs. Chaque caisson définit ainsi une zone indépendante de chauffage, dans laquelle sont réglées des conditions spécifiques de chauffage. Les caissons sont séparés par des parois présentant des ouvertures pour le matelas et les convoyeurs supérieurs et inférieurs. L'utilisation d'une pluralité de caissons permet ainsi une élévation graduée de la température du matelas tout au long de sa traversée de l'étuve et évite l'apparition de points chauds dus à un chauffage localement trop important ou alternativement la présence au sein du matelas de zones dans lesquelles le liant n'aurait pas été entièrement polymérisé. Une étuve utilisée dans le procédé de fabrication de laine minérale comprend ainsi très couramment une multitude de caissons (par exemple entre 3 et 10), ainsi que des moyens connus permettant d'établir des conditions thermiques variables au sein de chaque caisson.

A l'heure actuelle, l'utilisation de nouveaux liants alternatifs, en remplacement des résines formo-phénoliques, rend le contrôle des conditions du procédé de cuisson du matelas de fibres dans une étuve classique telle que décrite précédemment plus difficile. De tels liants, généralement dépourvus de formaldéhyde, parfois qualifiés de « liants verts », notamment lorsqu'ils sont au moins partiellement issus d'une base de matière première renouvelable, en particulier végétale, notamment du type à base de sucres hydrogénés ou non, par exemple tel que décrit dans la les demandes WO 2009/080938 et WO 2010/029266, nécessitent le plus souvent une très bonne régulation des températures de cuisson pour atteindre l'état thermodurci, la gamme de température de cuisson étant plus étroite. Tout particulièrement le liant doit être soumis à une température comprise entre un minimum pour achever son durcissement et un maximum au-delà duquel il se dégrade rapidement, ce qui se traduit au final par des propriétés mécaniques dégradées du produit final, même après son installation. La différence entre le minimum et le maximum, en fonction du type de liant vert, peut être de l'ordre de seulement 20°C, voire moins. Le contrôle de la température dans le matelas de fibres nécessite donc de nouvelles techniques et en particulier des changements dans la conception même des étuves.

Un procédé de mesure à l'intérieur d'un matelas fibreux a déjà été décrit dans la demande WO 2016108006 de la demanderesse, mais il existe toujours un besoin d'un système moins complexe et plus résistant à l'environnement chaud et poussiéreux des étuves.

Un but de l'invention est de fournir une étuve comportant un système de mesure précis des caractéristiques du matelas durant sa cuisson, et qui soit résistant dans le temps.

A cet effet, un objet de l'invention est une étuve pour le chauffage d'un matelas fibreux, notamment un matelas comprenant des fibres minérales ou végétales liées par un liant, ladite étuve comprenant au moins un premier convoyeur pour le transport du matelas dans une direction d'avancement, et un système de mesure à l'intérieur du matelas, ledit système de mesure comprenant un capteur monté sur ledit premier convoyeur et adapté pour se déplacer dans une direction transversale entre une position rétractée à l'intérieur du convoyeur et une position de mesure à l'intérieur du matelas sous l'effet d'un système d'actionnement, le système de mesure étant tel que le capteur est relié par un système de transmission mécanique à un doigt en saillie sur un côté latéral du premier convoyeur, et le système d'actionnement comprend au moins une surface de contact située en regard dudit côté latéral du convoyeur et adaptée pour coopérer avec ledit doigt lors de son déplacement dans la direction d'avancement pour déplacer le capteur de sa position rétractée à sa position de mesure par l'intermédiaire du système de transmission mécanique.
L'étuve selon l'invention se définit par les trois directions suivantes :
- la direction d'avancement du matelas à l'intérieur de l'étuve,
- la direction transversale, qui correspond à la direction de l'épaisseur du matelas,
- la direction latérale, qui est perpendiculaire aux deux directions précitées.

On comprend que le doigt, le système de transmission, et le capteur, sont montés sur le premier convoyeur, et solidaires de son déplacement dans la direction d'avancement. Le doigt est situé sur un côté latéral du convoyeur.

Le système d'actionnement, qui comprend notamment la surface de contact destinée à coopérer avec le doigt, est situé au moins en partie sur le côté de l'étuve, en regard du côté latéral du premier convoyeur, et solidaire du bâti de l'étuve. Il est ainsi facilement accessible et observable par l'opérateur. De plus, l'installation du système de mesure sur une étuve existante est facilitée.

Le système de mesure est ainsi simple, robuste, et pérenne malgré les conditions difficiles auxquelles il est exposé.

Le premier convoyeur peut être indifféremment le convoyeur inférieur ou le convoyeur supérieur de l'étuve.

Selon un exemple, le système de transmission mécanique est configuré de sorte de sorte qu'un mouvement latéral du doigt engendre un mouvement transversal du capteur. Par exemple, le système de transmission mécanique comprend un bras de transmission s'étendant latéralement et un levier pivotant relié audit bras de transmission et audit capteur de sorte qu'un mouvement latéral du bras de transmission engendre un mouvement transversal du capteur.

Pour la suite de la présente description, on appelle première position du doigt une position du doigt dans laquelle le capteur est dans sa position rétractée et deuxième position du doigt une position dans laquelle le capteur le capteur est dans sa position de mesure.

Selon un exemple, le doigt est un galet rotatif. Le galet roule pour ainsi dire le long de la surface de contact. Il permet de limiter les frottements pour faciliter le mouvement et la coopération avec la surface de contact.

A l'intérieur de l'étuve, les convoyeurs compriment le matelas pour lui donner l'épaisseur souhaitée. En fonction du produit fabriqué, la distance entre le premier et le deuxième convoyeur est donc réglable. En particulier, la hauteur du convoyeur supérieur est généralement réglée à chaque démarrage de la ligne ou lors d'un changement de produit. Pour que la mesure soit la plus juste possible, il est préférable de mesurer au cœur du produit, c'est-à-dire de préférence à mi-distance entre le premier et le deuxième convoyeur. De façon avantageuse, le système de mesure comprend un système d'ajustement de la position de mesure du capteur en fonction de la position d'un deuxième convoyeur faisant face audit premier convoyeur dans la direction transversale. De préférence, le système d'ajustement est configuré de sorte que la position de mesure du capteur soit telle que celui-ci soit positionné à mi-distance entre le premier et le deuxième convoyeur, dans la direction transversale.

Selon un exemple, le système d'ajustement de position comprend des moyens de réglage en position de la surface de contact dans la direction latérale, en fonction de la position du deuxième convoyeur.

Selon un exemple, les moyens de réglage en position comprennent un système de transmission configuré pour transformer un mouvement transversal du deuxième convoyeur en un mouvement latéral de la surface de contact.

Selon un exemple, la surface de contact est solidaire d'un élément de coulissement, monté coulissant le long d'un rail solidaire du deuxième convoyeur et dont l'inclinaison par rapport à la direction transversale et à la direction latérale est telle qu'un déplacement transversal du deuxième convoyeur entraîne un déplacement latéral de l'élément de coulissement et donc de la surface de contact.

L'élément de coulissement est par exemple un ergot coulissant à l'intérieur d'une rainure formant rail. Ou il peut s'agir d'une glissière, adaptée pour coulisser sur une nervure formant rail.

Selon un exemple, un bras de liaison, de préférence guidé en translation latérale, relie la surface de contact à l'élément de coulissement, dont il est solidaire.

Selon un exemple, le doigt est rappelé élastiquement dans une position dans laquelle le capteur se trouve dans sa position rétractée (première position), en particulier sollicité latéralement en éloignement du premier convoyeur.

La surface de contact est agencée à une position prédéterminée et fixe par rapport au bâti de l'étuve, dans la direction d'avancement. Selon un exemple, la surface de contact forme au moins une rampe de déploiement. qui permet un passage progressif du doigt de sa première position à sa deuxième position (atteinte lorsque le doigt a atteint le sommet de la rampe).

La rampe a de préférence une longueur, mesurée dans la direction d'avancement, comprise entre 5 et 50 cm.

Selon une disposition préférentielle mais non limitative, la rampe se prolonge par un palier. Lorsque le doigt est au contact du palier, le capteur est maintenu dans sa position de mesure.

On peut envisager que le palier présente une forme de rail pour guider le doigt.

Selon un exemple, le système de mesure est configuré de sorte que le capteur est déployé dans sa position de mesure en une abscisse dite de début de mesure dans la direction d'avancement, et de sorte que le capteur est retourné dans sa position rétractée en une abscisse dite de fin de mesure dans la direction d'avancement.

La durée et la fréquence de mesure à l'intérieur du matelas peuvent varier en fonction de l'agencement du système de mesure. Selon un mode de réalisation, le système de mesure peut être configuré de sorte que la mesure soit continue durant tout le trajet du matelas à l'intérieur de l'étuve. Selon un autre mode de réalisation, le système de mesure peut être configuré pour permettre plusieurs mesures courtes en différents endroits du trajet.

Selon un exemple, le système d'actionnement est configuré de telle sorte que le contact entre le doigt et la surface de contact est rompu en amont de l'abscisse de fin de mesure.

La surface de contact peut alors être assez courte, dans la mesure où elle n'a qu'une fonction de déploiement du capteur, mais n'exerce pas de fonction de maintien du capteur en position de mesure. Ce mode de mise en œuvre permet une intégration aisée du système de mesure dans des étuves existantes.

Par exemple, la surface de contact peut avoir une longueur totale, mesurée dans la direction d'avancement, inférieure à 1 mètre, de préférence inférieure 50 cm.

Notamment lorsque la surface de contact a ainsi une longueur inférieure à la longueur de mesure souhaitée, le système d'actionnement peut comprendre en outre un système de blocage en position latérale du doigt, qui, lui, exerce la fonction de maintien du doigt dans sa position de mesure, jusqu'à l'abscisse de fin de mesure. De préférence, ce système de blocage en position est configuré de sorte que le doigt est, par défaut, bloqué dans sa position latérale. En d'autres termes, le système de blocage agit, par défaut, pour bloquer le doigt en position.

Selon une configuration, le système de blocage permet le blocage du doigt dans une pluralité de positions de blocage latéral prédéfinies, régulièrement espacées au non.

Par exemple, le système de blocage en position peut comprendre un cliquet rotatif muni d'au moins une dent d'arrêt et sollicité par des moyens de rappel élastique dans une position de blocage dans laquelle ladite dent est adaptée pour coopérer avec des moyens de retenue complémentaires portés par le doigt ou un élément de support du doigt.

Le cliquet rotatif est solidaire du premier convoyeur.

Ces moyens de retenue complémentaires comprennent par exemple une pluralité d'éléments de retenue de la dent, répartis dans la direction latérale, chaque élément de retenue correspondant à une position de blocage latéral prédéterminée pour le doigt.

On comprend que, dans un cas où le système d'actionnement comprend un tel système de blocage, le système d'actionnement doit en outre comporter des moyens de déblocage de la position latérale du doigt, configurés pour rendre possible la coopération du doigt avec la surface de contact notamment.

Par exemple, le système d'actionnement comprend des moyens de déblocage du cliquet permettant de faire pivoter le cliquet à l'encontre des moyens de rappel élastique, dans une position désengagée dans laquelle la dent est désengagée desdits moyens de retenue complémentaires.

Selon un exemple, les moyens de déblocage comprennent au moins une première rampe de désamorçage agencée pour coopérer avec le cliquet au droit de la surface de support, et plus particulièrement en amont de la rampe de déploiement et, le cas échéant, au droit d'au moins une portion du palier. Le doigt peut ainsi être déplacé de sa position rétractée à sa position de mesure. La rampe de désamorçage est solidaire du bâti de l'étuve. Le système de blocage en position latérale du doigt permet, lorsque le doigt quitte le palier, que le capteur reste dans sa position de mesure, au lieu de revenir.

Une fois la mesure réalisée à l'intérieur de l'étuve, le capteur est généralement rétracté.

Dans ce but, et notamment lorsque le doigt est rappelé élastiquement dans sa première position, les moyens de déblocage peuvent comprendre une deuxième rampe de désamorçage espacée de la première rampe de désamorçage, dans la direction d'avancement. En désamorçant les moyens de blocage, la deuxième rampe permet le retour du doigt dans sa première position, sous l'effet des moyens de rappel élastique. La deuxième rampe de désamorçage est solidaire du bâti de l'étuve.

Selon un mode de réalisation alternatif, la surface de contact peut comporter un palier s'étendant continument jusqu'à l'abscisse de fin de mesure, et notamment jusqu'au voisinage de la sortie de l'étuve. Dans ce cas, la surface de contact exerce les deux fonctions de déploiement du capteur et de maintien du capteur dans sa position de mesure. Les moyens de blocage/déblocage en position du doigt peuvent éventuellement être omis. L'avantage de cet agencement est que la mesure se fait exactement au cœur du matelas, avantageusement au millimètre près et non selon des positions de blocage prédéfinies telles que mentionnées précédemment en lien avec les moyens de blocage/déblocage.

Selon un exemple, au moins le premier convoyeur est formé d'une pluralité de palettes constituées de grilles articulées entre elles et perforées.

Selon un exemple, le capteur est un capteur de température. Cette disposition n'est toutefois pas limitative, et le système de mesure pourrait aussi être un système de mesure d'humidité, dans lequel le capteur serait un capteur d'humidité.

Selon une disposition avantageuse, le système de mesure est en outre relié à un organe de contrôle du procédé de cuisson, adapté pour optimiser la cuisson du produit en fonction de la mesure réalisée par le capteur.

L'exemple qui suit illustre l'invention de manière non-limitative.

Dans les figures ci-dessous, les représentations ne sont pas nécessairement à l'échelle.
[Fig. 1] est une vue schématique en élévation d'une installation de fabrication d'un matelas fibreux, comprenant une étuve selon l'invention ;
[Fig. 2] est une vue schématique en coupe selon Il de la figure 1;
[Fig. 3] illustre une palette du convoyeur inférieur de l'étuve de la figure 1 intégrant un système de mesure selon l'invention, la palette portant un capteur, un système de transmission mécanique et un doigt selon l'invention ;
[Fig. 4] montre la palette de la figure 3 et le système d'actionnement associé, au voisinage de l'abscisse de début de mesure ;
[Fig. 5] est une vue agrandie d'un détail de la figure 4 ;
[Fig. 6] est une vue partielle, en perspective, du système de mesure de la figure 4 ;
[Fig. 7] est une vue partielle, en perspective du système de mesure des figures précédentes, au voisinage de l'abscisse de fin de mesure.

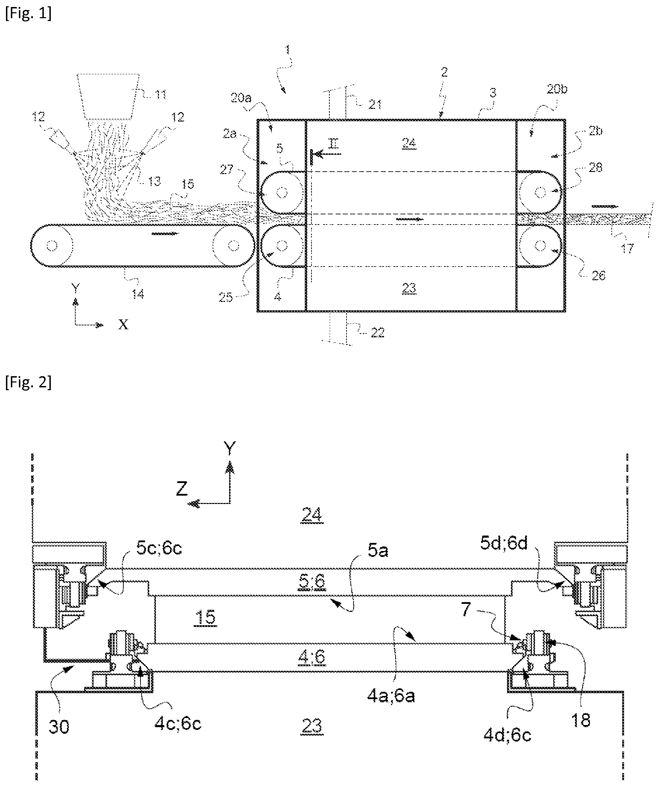

Sur la figure 1 est représentée schématiquement une installation 1 de fabrication de produit fibreux à base de laine de verre. Cette installation 1 comprend une unité de fibrage 11 à laquelle du verre fondu est amené, de manière usuelle, à partir d'un four. L'installation 1 comprend des applicateurs 12 de liant prévus pour déposer, notamment par pulvérisation, un liant sur le voile de fibres 13 produit par l'unité de fibrage 11. Les fibres sont recueillies sur un convoyeur perforé 14, sous la forme d'un matelas 15 de fibres de laine de verre mélangées avec le liant. Le liant peut être une résine thermodurcissable, ou tout autre type de liant approprié.

Au bout du convoyeur 14, l'installation 1 comprend une étuve de réticulation 2 entourée par une enceinte 3 fermée (hormis autour du matelas à l'entrée et à la sortie) délimitant à l'entrée 2a, un sas d'entrée 20a et à la sortie 2b, un sas de sortie 20b, et entre les sas d'entrée et de sortie 20a, 20b, une série de caissons séparés les uns des autres par des parois (non représentées) et reliés à un ou plusieurs conduits d'alimentation 21 pour l'introduction de gaz chauds de cuisson du matelas, et un ou plusieurs conduits d'échappement 22 pour l'évacuation des fumées résultant de la cuisson du matelas, en particulier de la vaporisation de l'eau contenue dans le matelas. L'enceinte 3 est traversée par deux convoyeurs 4, 5 de transport et de calibrage du matelas 15. Il s'agit d'un convoyeur inférieur 4 et d'un convoyeur supérieur 5 en regard l'un de l'autre. La distance entre les convoyeurs 4, 5 est réglable, de façon à calibrer l'épaisseur du matelas 15.

Ces convoyeurs 4, 5 forment chacun une bande transporteuse sans fin. Chacun comprend, de manière classique, une pluralité de palettes 6 articulées entre elles et perforées pour être perméables aux gaz, entraînées autour de rouleaux d'entrée respectivement 25, 27 et de sortie 26, 28 Mais plus généralement, chaque convoyeur peut être formé de tout élément de convoyage perméable aux gaz et formant une bande sans fin.

Tout en assurant le passage des gaz chauds favorisant la prise rapide du liant, les convoyeurs 4, 5 compriment le matelas 15 pour lui donner l'épaisseur souhaitée.

Pour la suite de la présente description, on définit la direction X de l'étuve 2 correspondant à la direction d'avancement du matelas 15 à l'intérieur de l'étuve, Y la direction transversale de l'étuve 2 qui correspond à la direction de l'épaisseur du matelas 15 et est donc orthogonale à la surface utile 4a, 5a de chaque convoyeur (i.e. surface en contact avec le matelas), et enfin Z la direction latérale, orthogonale aux directions X et Y.

La figure 2 est une vue partielle de l'étuve 2 en coupe latérale : le matelas 15 est comprimé entre les surfaces utiles 4a, 5a des convoyeurs inférieur et supérieur 4, 5, chaque surface utile 4a, 5a étant ici formée par la juxtaposition des surfaces utiles 6a d'une pluralité de palettes 6 du convoyeur concerné.

Les côtés latéraux 4c, 4d du convoyeur inférieur sont formés respectivement par la juxtaposition des côtés latéraux 6c, 6d d'une pluralité de palettes 6. Il en est de même des côtés latéraux 5c, 5d du convoyeur supérieur.

Typiquement, comme illustré sur la figure 2, le module de soufflage d'air chaud 23 est situé directement sous le brin utile du convoyeur inférieur 4 et le module d'aspiration 24, directement au-dessus du brin utile du convoyeur supérieur 5.

Comme illustré sur la droite de la figure 2, les palettes 6 des convoyeurs 4 et 5 sont associées à des moyens de support, positionnés à l'intérieur de l'étuve 2, et qui guident leur déplacement. Pour chaque palette 6, les moyens de support comprennent une chaîne 18 enroulée autour de roues (non représentées) et relié à une languette latérale 7 de la palette 6, comme montré sur la figure 2.

La figure 2 illustre une palette 6 du convoyeur inférieur 4, intégrant des éléments d'un système de mesure 30 selon l'invention. Comme il ressort de la figure, le système de mesure 30 est au moins en partie situé sur le côté latéral 4c du convoyeur inférieur 4.

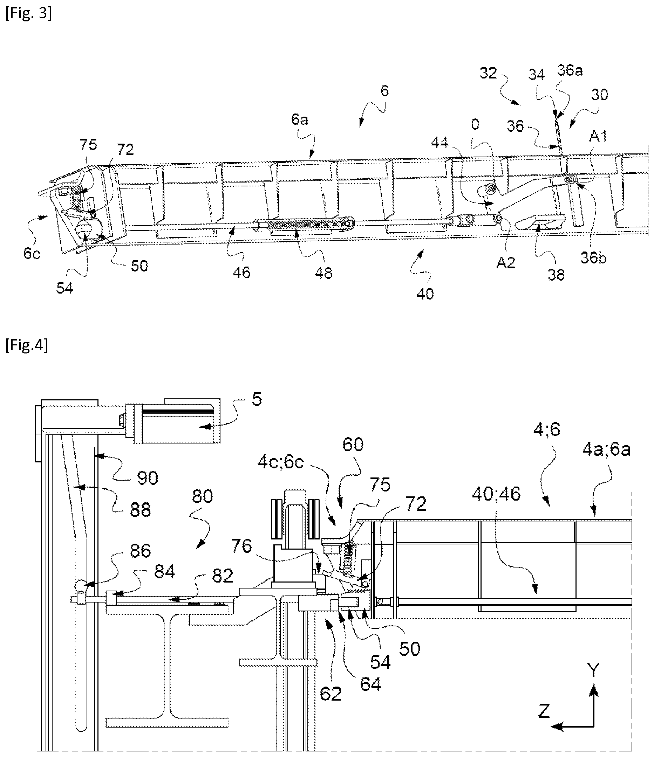

La figure 3 illustre plus en détail la même palette 6, ainsi que le système de mesure 30.

Bien que le système de mesure 30 soit associé, dans le mode de réalisation illustré, au convoyeur inférieur 4 de l'étuve 2, il est évidemment tout à fait possible de transposer l'agencement décrit au convoyeur supérieur 5.

Le système de mesure 30 comprend un appareil de mesure 32 muni d'au moins un capteur 34 disposé, dans l'exemple, à l'extrémité distale 36a d'une sonde longitudinale 36 s'étendant dans la direction transversale Y (c'est-à-dire orthogonalement au plan de la surface utile 6a de la palette 6). La sonde est adaptée pour se déplacer à travers un orifice traversant (non visible) de la surface utile 6a. Le capteur 34 peut ainsi être déplacé entre une position rétractée dans laquelle il est situé en dessous de la surface utile 6a (le « dessus » étant ici défini en direction du matelas) et une position de mesure dans laquelle le capteur 34 fait saillie à l'intérieur du matelas 15. Le capteur 34 est de préférence situé vers le centre de la palette 6, dans la direction latérale Z. Il est avantageusement situé à mi-distance entre les côtés latéraux 4c, 4d.

Dans l'exemple, le capteur 34 est un capteur de température, utilisant avantageusement la technologie dite de type SAW (pour Surface Acoustic Wave en anglais ou onde acoustique de surface en français). Dans d'autres modes de réalisation, le capteur pourrait être un capteur d'humidité ou autre.

Comme variante, le système de mesure 30 peut comprendre une pluralité de capteurs 34 disposés sur la même palette ou sur des palettes différentes.

Dans l'exemple, e capteur 34 est relié par des fils (non représentés) à une antenne 38 montée sur la palette 6, au droit du capteur 34. Cette antenne 38 (ci-après antenne embarquée) est reliée par une connexion sans fil à une autre antenne (non illustrée) formant unité d'interrogation de l'appareil de mesure (ci-après antenne fixe) et solidaire du bâti de l'étuve. L'antenne fixe est reliée à un boîtier électronique qui sert au traitement du signal et à l'envoi des données vers un ordinateur, une autre interface utilisateur, ou tout organe adapté. Selon une disposition avantageuse, le système de mesure 30 est ainsi relié à un organe de contrôle du procédé de cuisson, adapté pour optimiser la cuisson du produit en fonction de la mesure réalisée par le capteur. Comme variante, l'antenne 38 peut être montée fixe sur la sonde longitudinale 36.

La technologie de type SAW présente l'avantage d'être sans fil, et fonctionne de la façon suivante : une onde électromagnétique est transmise par l'antenne fixe, à l'antenne embarquée 38. L'onde électromagnétique est transformée en onde acoustique. La température du milieu dans lequel se trouve le capteur 34 (température à l'intérieur du matelas 15) influe sur les propriétés physiques de l'onde acoustique se propageant en surface du capteur 34. En retour, l'onde modifiée est transformée en onde électromagnétique pour être renvoyée vers l'antenne fixe. Le boîtier électronique auquel est reliée l'antenne fixe traite alors le signal et l'envoie vers l'extérieur.

Conformément à l'invention, le capteur 34 est relié par un système de transmission mécanique 40 à un doigt 54 en saillie sur un côté latéral du premier convoyeur 4, ici le côté latéral 4c. Ainsi, tout déplacement du doigt 54 entraîne un déplacement du capteur 34.

Le système de mesure 30 comprend par ailleurs un système d'actionnement 60 comprenant au moins une surface de contact destinée à coopérer avec le doigt 54 lors de son déplacement dans la direction d'avancement X pour déplacer le capteur 34 entre sa position rétractée et sa position de mesure à l'intérieur du matelas 15 par l'intermédiaire du système de transmission mécanique 40.

Le système de transmission mécanique 40 et le système d'actionnement 60 sont décrits plus en détail ci-après :
Le système de transmission 40, globalement défini dans un plan latéral de l'étuve 2 (un plan orthogonal à l'axe X) comme illustré sur la figure 3, comprend, dans l'exemple, un levier de transmission pivotant 44 et un bras de transmission sous forme de tige (ci-après tige de transmission) 46.

La sonde 36 du capteur 34 est monté coulissante dans la direction transversale Y, et son extrémité proximale 36b est montée pivotante par rapport au levier de transmission 44 (ci-après levier) autour d'un axe A1, le levier 44 étant lui-même monté pivotant par rapport à la palette 6 autour d'un axe principal O s'étendant dans la direction d'avancement X.

Le levier 44 pivote ainsi autour de l'axe O, dans un plan latéral de l'étuve 2.

Les axes O et A1 sont parallèles entre eux et sont inclus dans un plan sensiblement orthogonal à la direction transversale Y. Ainsi, lorsque le levier 44 pivote, l'axe A1 monte ou descend, faisant coulisser le capteur 34 dans la direction transversale Y, de sa position de mesure à sa position rétractée ou inversement.

Le levier 44 est par ailleurs relié autour d'un axe A2 à la tige de transmission 46 qui s'étend dans la direction latérale Z.

Les axes O et A2 sont parallèles entre eux et à la direction d'avancement X et sont inclus dans un plan sensiblement orthogonal à la direction latérale Z. Ainsi, lorsque le levier 44 pivote, l'axe A2 se déplace latéralement, déplaçant la tige 46 dans la même direction latérale Z.

Comme illustré sur la figure 2, la tige de transmission 46 est par ailleurs associée à un ressort de rappel 48, lequel la sollicite, au repos, vers le côté latéral 4c de la palette 6 (c'est-à-dire en éloignement du capteur 34).

A son extrémité, la tige de transmission 46 est terminée par une fourche 50 portant un axe (non visible), formant axe de rotation pour un galet ou roue 54 constituant le doigt du système de mesure 30. L'axe de rotation s'étend dans la direction transversale Y.

On comprend que le levier 44 et la tige de transmission 46 lient les mouvements du galet 54 et du capteur 34 de la façon suivante : sous l'effet de la force de rappel du ressort 48, le galet 54 se trouve, par défaut, dans une première position la plus éloignée de la palette 6. Dans cette position, le capteur 34 se trouve dans sa position rétractée. Si le galet 54 est déplacé à l'encontre de la force du ressort 48 jusqu'à une deuxième position prédéterminée, la tige de transmission 46 est déplacée latéralement et le levier 44 est entraîné en pivotement autour de son axe O, entraînant dans le même temps le capteur 34 jusqu'à sa position de mesure.

Le système de mesure 30 est généralement configuré de sorte que le capteur 34 est déployé dans sa position de mesure au voisinage de l'entrée de l'étuve 2, puis rétracté au voisinage de la sortie d'étuve 2. De cette façon, des mesures peuvent être réalisées en un point du matelas 15 durant tout le trajet dudit point à l'intérieur de l'étuve.

Pour faciliter les explications à suivre, on définit ci-après l'abscisse de chaque élément ou zone le long de l'axe X, orienté de l'entrée vers la sortie de l'étuve.

On définit par exemple l'abscisse XO comme l'abscisse pour laquelle la surface des convoyeurs 4, 5 devient plane en bout de bande au voisinage des rouleaux d'entrée 25, 27 et l'abscisse XF comme celle jusqu'à laquelle la surface des convoyeurs 4, 5 est plane en bout de bande au voisinage des rouleaux de sortie 26, 28.

La surface de contact 64 est agencée à une position fixe par rapport au bâti de l'étuve et prédéterminée selon l'axe X. X1 est l'abscisse de début de mesure pour laquelle le capteur 34 arrive dans sa position de mesure à l'intérieur du matelas 15 et X2 est l'abscisse de fin de mesure pour laquelle le capteur 34 est extrait du matelas 15.

De préférence, la distance XO-X1 est inférieure à 2 mètres

De préférence, la distance X2-XF (en valeur absolue) est inférieure à 2 mètres

La distance X1-X2 dépend entièrement de la longueur de l'étuve et de la nature de la mesure souhaitée. Si la mesure doit être la plus longue possible pour déterminer le profil de température durant l'ensemble de la cuisson, alors cette distance sera choisie la plus longue possible.

Le système d'actionnement 60, illustré sur les figures 4 à 7, comprend un élément de contact 62 disposé au voisinage de l'entrée de l'étuve 2, solidaire du bâti de l'étuve, et dont une surface 64 disposée en regard du côté latéral 4c du convoyeur 4 portant le système de mesure (ici le convoyeur inférieur) forme la surface de contact destinée à coopérer avec le galet 54.

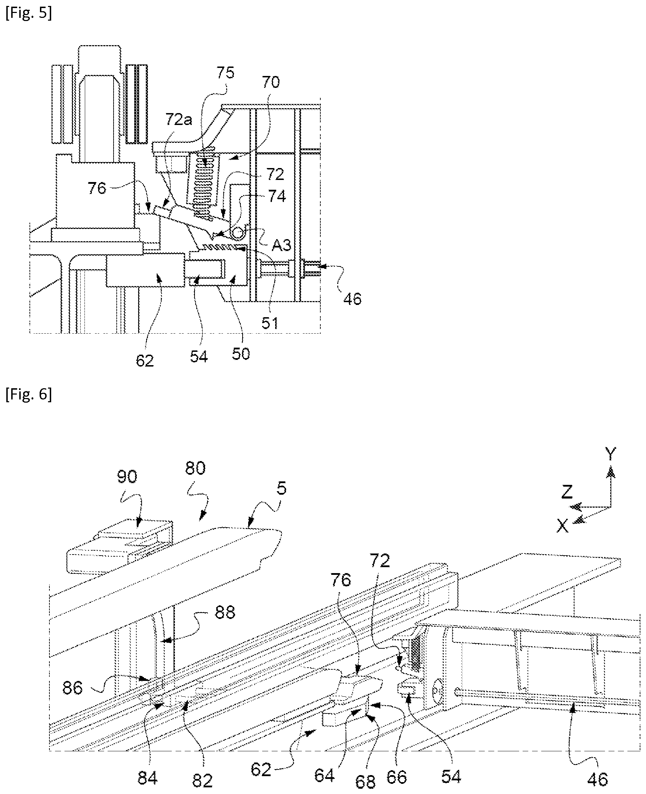

La surface de contact 64, mieux visible sur la figure 6, forme une rampe de déploiement 66 inclinée par rapport aux directions X et Z, de préférence une rampe plane définie dans un plan parallèle à la direction transversale Y. A mesure que l'abscisse augmente, la rampe de déploiement 66 se rapproche du côté latéral 4c du convoyeur 4.

La rampe de déploiement 66 est avantageusement prolongée par un palier 68, de préférence un palier plan défini dans un plan orthogonal à la direction latérale Z.

En se déplaçant dans la direction d'avancement X, le doigt 54 entre en contact avec la rampe 66. Sous l'effet de la force d'appui, supérieure à la force de rappel du ressort 48, le doigt 54 est progressivement entraîné en direction du convoyeur 4. Une fois en contact avec le palier 68 (abscisse X1), le galet 54 a atteint sa deuxième position, dans laquelle le capteur 34 se trouve dans sa position déployée.

Le positionnement du palier 68 dans la direction latérale Z conditionne ainsi la profondeur de mesure du capteur 34. Du fait de la longueur fixe de la tige transmission 46, plus le palier 68 est proche du convoyeur 4, plus la position de mesure sera haute, et vice versa.

Dans le mode de réalisation considéré, l'élément de contact 62 s'étend sur une longueur limitée en entrée de l'étuve. Il présente typiquement une longueur, mesurée dans la direction d'avancement, inférieure à 1 mètre.

Pour éviter qu'en quittant l'élément de contact 62 le galet 54 ne revienne à sa première position sous l'effet du rappel élastique induit par le ressort 48, le système d'actionnement 60 est muni d'un système 70 de blocage en position latérale du doigt 54, visible sur la figure 5.

Dans l'exemple, ce système 70 comprend un cliquet 72 monté pivotant par rapport à la palette 6, autour d'un axe A3 s'étendant dans la direction d'avancement X, et muni d'au moins une dent d'arrêt 74. Le cliquet 72 est sollicité élastiquement, par un ressort 75, dans une position de blocage dans laquelle la dent 74 coopère avec l'un parmi une pluralité d'éléments de retenue complémentaires solidaires du doigt, répartis dans la direction latérale Z, et correspondant respectivement à une pluralité de positions de blocage latéral prédéterminées pour le doigt 54. Dans l'exemple, les éléments de retenue complémentaires sont une pluralité de crans 51, portés par la fourche 50 de support du galet 54.

Pour permettre la coopération du galet 54 avec la rampe 66, il est évidemment nécessaire de désamorcer le système de blocage 70 en amont de l'élément de contact 62.

Le système d'actionnement comprend dans ce but des moyens de déblocage du cliquet permettant de faire pivoter le cliquet jusqu'à désengager la dent 74 des crans 51. Ces moyens de déblocage comprennent une rampe de désamorçage 76, visible sur la figure 6, solidaire du bâti, globalement définie dans un plan incliné par rapport à la direction d'avancement X et la direction transversale Y et parallèle à la direction latérale Z. La rampe de désamorçage 76 est au moins partiellement juxtaposée à l'élément de contact 62, et adaptée pour coopérer avec l'extrémité distale 72a du cliquet 72 de façon à faire pivoter le cliquet 72 autour de son axe A3 et désengager la dent 74, en amont et au droit de l'élément de contact 62, jusqu'au doit du palier 68.

Les dimensions de la rampe de désamorçage 76 sont choisies de sorte que le contact avec le cliquet 72 soit rompu une fois le galet arrivé sur le palier 68.

En quittant la rampe de désamorçage 76, le cliquet 72 est immédiatement rappelé dans sa position de blocage par le ressort 75. Par coopération de la dent 74 avec un cran 51 de la fourche 50, le galet 54 est maintenu dans sa deuxième position, déterminée par le positionnement latéral du palier 68.

Pour les cas où la dent 74 ne serait pas en regard d'un cran au moment du désamorçage, la surface de contact 64 peut être prolongée en aval du palier 68 par une rampe de sécurité descendante (par opposition à la rampe de déploiement ascendante 66) servant à permettre un blocage progressif entre la dent 74 et l'un des crans adjacents 51 et à éviter un retour brusque du doigt 54 dans sa première position.

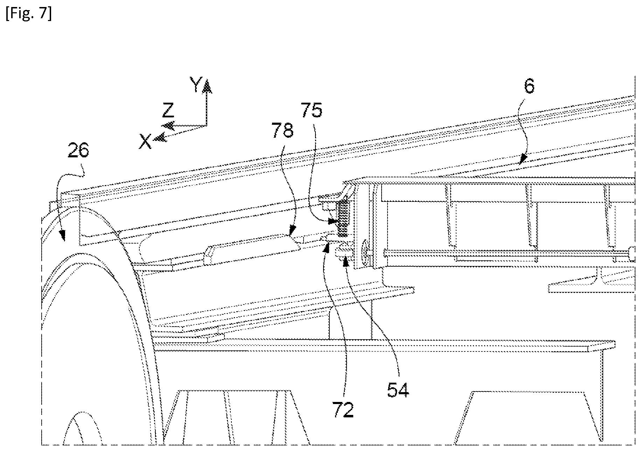

Comme illustré sur la figure 7, au voisinage de la sortie de l'étuve 2, et pour assurer le retour du capteur 34 dans sa position rétractée sous l'effet du rappel élastique du ressort 48, le système d'actionnement 40 comprend une deuxième rampe de désamorçage 78, également solidaire du bâti, adaptée pour soulever le cliquet jusqu'à désengager la dent 74 des crans 51.

Comme indiqué précédemment, la hauteur du convoyeur supérieur 5 est généralement réglée à chaque démarrage de la ligne, et lors d'un changement de produit. Pour que la mesure de température à l'intérieur du matelas 15 soit la plus juste possible, il est préférable de mesurer au cœur du matelas, c'est-à-dire de préférence à mi-distance entre le premier et le deuxième convoyeur 4, 5. De façon avantageuse, le système de mesure 30 est pourvu d'un système 80 d'ajustement de la position de mesure du capteur 34 en fonction de la position du convoyeur supérieur 5. Ce système d'ajustement 80 comprend, plus précisément, des moyens de réglage en position de l'élément de contact 62 dans la direction latérale Z, en fonction de la position du deuxième convoyeur 5 et en particulier de sa hauteur par rapport au convoyeur inférieur 4, dans la direction transversale Y.

Dans l'exemple illustré et comme visible sur la figure 4 notamment, l'élément de contact 62 est solidaire d'un bras de liaison 82 monté coulissant dans la direction latérale Z à l'intérieur d'un guide 84. Le bras de liaison 82 est par ailleurs solidaire d'un élément de coulissement 86 sous la forme d'un ergot, monté coulissant le long d'un rail 88 ici formé par une ouverture longiforme ménagée dans l'épaisseur d'un profilé vertical 90. Le profilé 90 et le rail 88 s'étendent globalement dans la direction transversale Y et sont solidaires du convoyeur supérieur 5. Comme illustré sur la figure, le rail 88 est incliné par rapport à la direction transversale Y et à la direction latérale Z de sorte qu'un déplacement transversal du deuxième convoyeur 5 entraîne un déplacement latéral de l'élément de coulissement 86 et donc de la surface de contact 64 qui en est solidaire.

L'ajustement est réalisé de la façon suivante : sur la figure 4, la position de mesure est à son maximum. Lorsque le convoyeur supérieur 5 est abaissé pour diminuer l'épaisseur du matelas 15, le profilé 90 et le rail 88 sont également déplacé vers le bas. Lorsque l'ergot 86 pénètre dans la partie inclinée du rail 88, il est progressivement déplacé latéralement en éloignement du convoyeur inférieur 4, déplaçant conjointement le palier 68 de l'élément de contact 62 et abaissant ainsi la position de mesure du capteur 34.

Grâce à la pluralité d'éléments de retenue (ici des crans) 51 ménagés sur la fourche 50, le cliquet 72 peut bloquer la position du galet 54 dans une pluralité de (deuxièmes) positions différentes, correspondant à différentes hauteurs de mesure.

Le mode de réalisation illustré et décrit ci-dessus n'est pas limitatif de l'invention, et de nombreuses variantes sont évidemment envisageables. Par exemple, selon un mode de réalisation alternatif non illustré, la surface de contact pourrait former une rampe prolongée par un palier s'étendant continument jusqu'à l'abscisse de fin de mesure X2. La surface de contact peut alors s'étendre sur une longueur conséquente de l'étuve, par exemple une longueur d'au moins 10 mètres. En particulier, il pourrait être envisagé de prévoir un palier s'étendant depuis le voisinage de l'entrée de l'étuve jusqu'au voisinage de la sortie de l'étuve.

Dans ce cas, la position de capteur étant maintenue par la coopération du galet avec le palier de l'élément de contact, des moyens de blocage et déblocage en position peuvent être omis.

## Revendications

1. Etuve (2) pour le chauffage d'un matelas fibreux (15), notamment un matelas comprenant des fibres minérales ou végétales liées par un liant, ladite étuve (2) comprenant au moins un premier convoyeur (4) pour le transport du matelas (15) dans une direction d'avancement (X), et un système de mesure (30) à l'intérieur du matelas (15), ledit système de mesure (30) comprenant un capteur (34) monté sur ledit premier convoyeur (4) et adapté pour se déplacer dans une direction transversale (Y) entre une position rétractée à l'intérieur du convoyeur (4) et une position de mesure à l'intérieur du matelas (15) sous l'effet d'un système d'actionnement (60), le système de mesure (30) étant tel que le capteur (34) est relié par un système de transmission mécanique (40) à un doigt (54) en saillie sur un côté latéral (4c) du premier convoyeur (4), **caractérisée en ce que** le système d'actionnement (60) comprend au moins une surface de contact (64) située en regard dudit côté latéral (4c) du premier convoyeur (4) et adaptée pour coopérer avec ledit doigt (54) lors de son déplacement dans la direction d'avancement (X) pour déplacer le capteur (34) de sa position rétractée à sa position de mesure par l'intermédiaire du système de transmission mécanique (40).

2. Etuve (2) selon la revendication 1, dans laquelle le système de transmission mécanique (40) comprend un bras de transmission (46) s'étendant latéralement et un levier pivotant (44) relié audit bras (46) et audit capteur (34) de sorte qu'un mouvement latéral du bras de transmission (46) engendre un mouvement transversal du capteur (34).

3. Etuve (2) selon la revendication 1 ou 2, dans laquelle le doigt (34) est un galet rotatif.

4. Etuve (2) selon l'une quelconque des revendications précédentes, dans laquelle le système de mesure (30) comprend en outre un système (80) d'ajustement de la position de mesure du capteur (34) en fonction de la position d'un deuxième convoyeur (5) faisant face audit premier convoyeur (4) dans la direction transversale (Y).

5. Etuve (2) selon la revendication précédente, dans laquelle le système d'ajustement de position (80) comprend des moyens de réglage en position de la surface de contact (64) dans la direction latérale (Z), en fonction de la position du deuxième convoyeur (5).

6. Etuve (2) selon la revendication précédente, dans laquelle la surface de contact (64) est solidaire d'un élément de coulissement (86), monté coulissant le long d'un rail (88) solidaire du deuxième convoyeur (5) et dont l'inclinaison par rapport à la direction transversale (Y) et à la direction latérale (Z) est telle qu'un déplacement transversal du deuxième convoyeur (5) entraîne un déplacement latéral de l'élément de coulissement (86) et donc de la surface de contact (64).

7. Etuve (2) selon l'une quelconque des revendications précédentes, dans laquelle le doigt (54) est rappelé élastiquement en éloignement du premier convoyeur (4), dans une position dans laquelle le capteur (34) se trouve dans sa position rétractée.

8. Etuve (2) selon l'une quelconque des revendications précédentes, dans laquelle la surface de contact (64) forme au moins une rampe de déploiement (66).

9. Etuve (2) selon la revendication précédente, dans laquelle la rampe (66) se prolonge par un palier (68).

10. Etuve (2) selon la revendication 8 ou 9, dans laquelle le système de mesure (30) est configuré de sorte que le capteur (34) est déployé dans sa position de mesure en une abscisse (X1) dite de début de mesure dans la direction d'avancement (X), et de sorte que le capteur (34) est retourné dans sa position rétractée en une abscisse (X2) dite de fin de mesure dans la direction d'avancement (X).

11. Etuve (2) selon l'une quelconque des revendications 8 à 10, dans laquelle le système d'actionnement (60) est configuré pour que le contact entre le doigt (54) et la surface de contact (64) soit rompu en amont de l'abscisse de fin de mesure (X2).

12. Etuve (2) selon l'une quelconque des revendications 8 à 11, dans laquelle la surface de contact (64) a une longueur, mesurée dans la direction d'avancement (X), inférieure à 1 mètre.

13. Etuve (2) selon les revendications 9 et 10, dans laquelle le palier (68) s'étend continument jusqu'à l'abscisse de fin de mesure (X2).

14. Etuve (2) selon l'une quelconque des revendications précédentes, dans laquelle le système d'actionnement (60) comprend en outre un système (70) de blocage en position latérale du doigt (54).

15. Etuve (2) selon la revendication précédente, dans lequel le système de blocage en position (70) comprend un cliquet rotatif (72) muni d'au moins une dent d'arrêt (74) et sollicité par des moyens de rappel élastique (75) dans une position de blocage dans laquelle ladite dent (74) est adaptée pour coopérer avec des moyens de retenue complémentaires (51) portés par le doigt (54) ou un élément de support (50) du doigt (54), et le système d'actionnement comprend des moyens (76, 78) de déblocage du cliquet (72) permettant de faire pivoter le cliquet (72) à l'encontre des moyens de rappel élastique (75), dans une position désengagée dans laquelle la dent (74) est désengagée desdits moyens de retenue complémentaires (51).

16. Etuve (2) selon la revendication précédente, dans laquelle les moyens de déblocage comprennent au moins une première rampe de désamorçage (76) agencée pour coopérer avec le cliquet (72) au droit de la surface de contact (64).

17. Etuve (2) selon la revendication 15 ou 16, dans laquelle les moyens de déblocage comprennent une deuxième rampe de désamorçage (78) espacée de la première rampe de désamorçage (76), dans la direction d'avancement.

18. Etuve (2) selon l'une quelconque des revendications précédentes, dans laquelle au moins le premier convoyeur (4) est formé d'une pluralité de palettes (6) constituées de grilles articulées entre elles et perforées.

19. Etuve (2) selon l'une quelconque des revendications précédentes, dans laquelle le capteur (34) est un capteur de température.

## Patentansprüche

1. Ofen (2) zum Erhitzen einer Fasermatte (15), insbesondere einer Matte, umfassend Mineral- oder Pflanzenfasern, die durch ein Bindemittel gebunden sind, der Ofen (2) umfassend mindestens ein erstes Förderband (4) zum Transportieren der Matte (15) in einer Vorwärtsrichtung (X) und ein Messsystem (30) im Inneren der Matte (15) umfasst, das Messsystem (30) umfassend einen Sensor (34), der an dem ersten Förderband (4) montiert ist und angepasst ist, um sich unter der Wirkung eines Betätigungssystems (60) in einer Querrichtung (Y) zwischen einer zurückgezogenen Position im Inneren des Förderbands (4) und einer Messposition im Inneren der Matte (15) zu verschieben, wobei das Messsystem (30) so ist, dass der Sensor (34) über ein mechanisches Übertragungssystem (40) mit einem Finger (54) verbunden ist, der an einer lateralen Seite (4c) des ersten Förderbands (4) hervorsteht,
**dadurch gekennzeichnet, dass**
das Betätigungssystem (60) mindestens eine Kontaktoberfläche (64) umfasst, die gegenüber der lateralen Seite (4c) des ersten Förderbands (4) gelegen und zum Zusammenwirken mit dem Finger (54) während seiner Verschiebung in der Vorwärtsrichtung (X) zum Bewegen des Sensors (34) über das mechanische Übertragungssystem (40) aus seiner zurückgezogenen Position in seine Messposition angepasst ist.

2. Ofen (2) nach Anspruch 1, wobei das mechanische Übertragungssystem (40) einen sich lateral erstreckenden Übertragungsarm (46) und einen Schwenkhebel (44) umfasst, der mit dem Arm (46) und dem Sensor (34) so verbunden ist, dass eine laterale Bewegung des Übertragungsarms (46) eine Querbewegung des Sensors (34) erzeugt.

3. Ofen (2) nach Anspruch 1 oder 2, wobei der Finger (34) eine rotierende Walze ist.

4. Ofen (2) nach einem der vorstehenden Ansprüche, wobei das Messsystem (30) ferner ein System (80) zum Einstellen der Messposition des Sensors (34) in Abhängigkeit von der Position eines zweiten Förderbands (5) umfasst, das dem ersten Förderband (4) in der Querrichtung (Y) gegenüberliegt.

5. Ofen (2) nach dem vorstehenden Anspruch, wobei das Positionseinstellsystem (80) Mittel zum Regeln der Position der Kontaktoberfläche (64) in der lateralen Richtung (Z) in Abhängigkeit von der Position des zweiten Förderbands (5) umfasst.

6. Ofen (2) nach dem vorstehenden Anspruch, wobei die Kontaktoberfläche (64) mit einem Gleitelement (86) fest verbunden ist, das entlang einer Schiene (88) gleitend montiert ist, die mit dem zweiten Förderband (5) fest verbunden ist, und dessen Neigung relativ zu der Querrichtung (Y) und zu der lateralen Richtung (Z) so ist, dass eine Querverschiebung des zweiten Förderbands (5) eine laterale Bewegung des Gleitelements (86) und somit der Kontaktoberfläche (64) erzeugt.

7. Ofen (2) nach einem der vorstehenden Ansprüche, wobei der Finger (54) von dem ersten Förderband (4) weg in eine Position elastisch zurückgeführt wird, in der sich der Sensor (34) in seiner zurückgezogenen Position befindet.

8. Ofen (2) nach einem der vorstehenden Ansprüche, wobei die Kontaktoberfläche (64) mindestens eine Ausfahrrampe (66) ausbildet.

9. Ofen (2) nach dem vorstehenden Anspruch, wobei die Rampe (66) durch ein Lager (68) verlängert ist.

10. Ofen (2) nach Anspruch 8 oder 9, wobei das Messsystem (30) so konfiguriert ist, dass der Sensor (34) an einer Abszisse (X1), die als Beginn der Messung in der Vorwärtsrichtung (X) bezeichnet wird, in seine Messposition ausgefahren ist und dass der Sensor (34) an einer Abszisse (X2), die als Ende der Messung in der Vorwärtsrichtung (X) bezeichnet wird, in seine zurückgezogene Position zurückgefahren ist.

11. Ofen (2) nach einem der Ansprüche 8 bis 10, wobei das Betätigungssystem (60) konfiguriert ist, damit der Kontakt zwischen dem Finger (54) und der Kontaktoberfläche (64) stromaufwärts der Abszisse (X2) des Endes der Messung unterbrochen wird.

12. Ofen (2) nach einem der Ansprüche 8 bis 11, wobei die Kontaktoberfläche (64) eine in der Vorwärtsrichtung (X) gemessene Länge von weniger als 1 Meter aufweist.

13. Ofen (2) nach den Ansprüchen 9 und 10, wobei sich das Lager (68) durchgehend bis zu der Abszisse (X2) des Endes der Messung erstreckt.

14. Ofen (2) nach einem der vorstehenden Ansprüche, wobei das Betätigungssystem (60) ferner ein System (70) zum Verriegeln des Fingers (54) in der lateralen Position umfasst.

15. Ofen (2) nach dem vorstehenden Anspruch, wobei das Positionsverriegelungssystem (70) eine drehbare Sperrklinke (72) umfasst, die mit mindestens einem Anschlagzahn (74) versehen ist und durch elastische Rückführmittel (75) in eine Verriegelungsposition vorgespannt ist, in der der Zahn (74) zum Zusammenwirken mit komplementären Haltemitteln (51) angepasst ist, die durch den Finger (54) oder ein Stützelement (50) des Fingers (54) getragen werden, und das Betätigungssystem Mittel (76, 78) zum Entriegeln der Sperrklinke (72) umfasst, die es ermöglichen, die Sperrklinke (72) gegen die elastischen Rückführmittel (75) in eine gelöste Position zu schwenken, in der der Zahn (74) von den komplementären Haltemitteln (51) gelöst ist.

16. Ofen (2) nach dem vorstehenden Anspruch, wobei die Entriegelungsmittel mindestens eine erste Entschärfungsrampe (76) umfassen, die zum Zusammenwirken mit der Sperrklinke (72) rechts von der Kontaktoberfläche (64) angepasst ist.

17. Ofen (2) nach Anspruch 15 oder 16, wobei die Entriegelungsmittel eine zweite Entschärfungsrampe (78) umfassen, die in der Vorwärtsrichtung von der ersten Entschärfungsrampe (76) beabstandet ist.

18. Ofen (2) nach einem der vorstehenden Ansprüche, wobei mindestens das erste Förderband (4) aus einer Vielzahl von Paletten (6) besteht, die aus gelenkig aneinander angebrachten und perforierten Gittern bestehen.

19. Ofen (2) nach einem der vorstehenden Ansprüche, wobei der Sensor (34) ein Temperatursensor ist.

## Claims

1. An oven (2) for heating a fibrous mat (15), in particular a mat comprising mineral or plant fibers bound by a binder, said oven (2) comprising at least a first conveyor (4) for transporting the mat (15) in a forward direction (X), and a measurement system (30) inside the mat (15), said measurement system (30) comprising a sensor (34) mounted on said first conveyor (4) and adapted to move in a transverse direction (Y) between a retracted position inside the conveyor (4) and a measurement position inside the mat (15) under the effect of an actuation system (60), the measurement system (30) being such that the sensor (34) is connected by a mechanical transmission system (40) to a finger (54) projecting from a lateral side (4c) of the first conveyor (4), **characterized in that** the actuation system (60) comprises at least one contact surface (64) located facing said lateral side (4c) of the first conveyor (4) and adapted to cooperate with said finger (54) in its movement in the forward direction (X) in order to move the sensor (34) from its retracted position to its measuring position by means of the mechanical transmission system (40).

2. The oven (2) according to claim 1, wherein the mechanical transmission system (40) comprises a transmission arm (46) extending laterally and a pivotable lever (44) connected to said arm (46) and to said sensor (34) such that a lateral movement of the transmission arm (46) generates a transverse movement of the sensor (34).

3. The oven (2) according to claim 1 or 2, wherein the finger (34) is a rotary roller.

4. The oven (2) according to any one of the preceding claims, wherein the measurement system (30) further comprises a system (80) for adjusting the measurement position of the sensor (34) as a function of the position of a second conveyor (5) facing said first conveyor (4) in the transverse direction (Y).

5. The oven (2) according to the preceding claim, wherein the position adjustment system (80) comprises means for adjusting the position of the contact surface (64) in the lateral direction (Z), depending on the position of the second conveyor (5).

6. The oven (2) according to the preceding claim, wherein the contact surface (64) is integral with a sliding element (86), mounted slidably along a rail (88) integral with the second conveyor (5) and whose inclination with respect to the transverse direction (Y) and to the lateral direction (Z) is such that a transverse movement of the second conveyor (5) causes a lateral movement of the sliding element (86) and therefore of the contact surface (64).

7. The oven (2) according to any one of the preceding claims, wherein the finger (54) is elastically returned away from the first conveyor (4), in a position wherein the sensor (34) is in its retracted position.

8. The oven (2) according to any one of the preceding claims, wherein the contact surface (64) forms at least one deployment ramp (66).

9. The oven (2) according to the preceding claim, wherein the ramp (66) is extended by a bearing (68).

10. The oven (2) according to claim 8 or 9, wherein the measurement system (30) is configured such that the sensor (34) is deployed in its measurement position in an abscissa (X1) called the start-of-measurement in the forward direction (X), and such that the sensor (34) is returned to its retracted position in an abscissa (X2) called the end-of-measurement in the forward direction (X).

11. The oven (2) according to any one of claims 8 to 10, wherein the actuation system (60) is configured so that the contact between the finger (54) and the contact surface (64) is broken upstream from the end-of-measurement abscissa (X2).

12. The oven (2) according to any one of claims 8 to 11, wherein the contact surface (64) has a length, measured in the forward direction (X), of less than 1 meter.

13. The oven (2) according to claims 9 and 10, wherein the bearing (68) extends continuously to the end-of-measurement abscissa (X2).

14. The oven (2) according to any one of the preceding claims, wherein the actuation system (60) further comprises a system (70) for locking the finger (54) in lateral position.

15. The oven (2) according to the preceding claim, wherein the position locking system (70) comprises a rotary pawl (72) provided with at least one stop tooth (74) and biased by elastic return means (75) in a locking position wherein said tooth (74) is adapted to cooperate with complementary retaining means (51) carried by the finger (54) or a support element (50) of the finger (54), and the actuation system comprises means (76, 78) for unlocking the pawl (72) making it possible to pivot the pawl (72) against the elastic return means (75), in a disengaged position wherein the tooth (74) is disengaged from said complementary retaining means (51).

16. The oven (2) according to the preceding claim, wherein the unlocking means comprise at least one first deactivation ramp (76) arranged to cooperate with the pawl (72) perpendicular to the contact surface (64).

17. The oven (2) according to claim 15 or 16, wherein the unlocking means comprise a second deactivation ramp (78) spaced from the first deactivation ramp (76), in the forward direction.

18. The oven (2) according to any one of the preceding claims, wherein at least the first conveyor (4) is formed of a plurality of pallets (6) consisting of screens articulated together and perforated.

19. The oven (2) according to any of the preceding claims, wherein the sensor (34) is a temperature sensor.
